# EUROPEAN PATENT SPECIFICATION

(11) **EP 3 599 012 B1**
(45) Date of publication and mention of the grant of the patent: **04.05.2022**
(21) Application number: 18185224.5
(22) Date of filing: 24.07.2018
(51) Int. Cl.: B01D 63/08, B01D 61/42

(54) **METHOD FOR PREPARING A MEMBRANE STACK, MEMBRANE STACK AND USE OF THE MEMBRANE STACK**
VERFAHREN ZUR HERSTELLUNG EINES MEMBRANSTAPELS, MEMBRANSTAPEL UND VERWENDUNG DES MEMBRANSTAPELS
PROCÉDÉ DE PRÉPARATION D'UNE PILE DE MEMBRANES, PILE DE MEMBRANES ET UTILISATION DE LA PILE DE MEMBRANES

(43) Date of publication of application: 29.01.2020
(73) Proprietor: Grabowski, Andrej, 71638 Ludwigsburg (DE)
(72) Inventor: Grabowski, Andrej, 71638 Ludwigsburg (DE)
(74) Representative: Patentanwälte Magenbauer & Kollegen Partnerschaft mbB

(56) References cited:
- WO-A1-2015/153885
- US-A- 5 922 200
- US-A1- 2005 126 981
- US-A1- 2012 117 789

## Description

The invention relates to a method for preparing a membrane stack for electrodialysis having at least two membranes, a cation-exchange membrane and an anion-exchange membrane, preferably membranes having a profiled surface, in which the at least two membranes comprise at least one flow channel, an inlet and an outlet.

Furthermore, the invention relates to a membrane stack for electrodialysis having at least two membranes a cation-exchange membrane and an anion-exchange membrane, preferably membranes having a profiled surface, in which the at least two membranes comprise at least one flow channel, an inlet and an outlet.

Besides, the invention relates to use of a membrane stack according to claim 7 for removing electrolyte, e.g., a salt or the like, from water, a product fluid or a process solution.

Methods for preparing a membrane stack as well as membrane stacks itself are state of the art. According to the state of the art each of the membranes are glued together or heat-sealed to form a membrane stack using several process steps. Subsequently the closest state of the art found is explained in more detail below.

The international patent application WO 2005/009596 A1 discloses a membrane assembly for continuous electrodialytic desalination, comprising at least one cation- and anion-exchange membrane, parallel to each other. The surface-structured membranes thus lie directly on one another without a spacer, wherein the sealing of the membranes results from interposed flat gaskets, from interposed correspondingly profiled membranes or from gluing or welding successive membranes.

Furthermore, the British patent application GB 1 289 738 A discloses membranes with thermoplastically embossed protuberances were the boundary of each exchange unit is sealed hermetically, thus preventing drying out and possible tearing of the membrane material. The membrane assembly is sealed by devices to compress the exchange assembly.

In addition, a sealing frame for a stack of alternating membranes in particular for dialysis or electrodialysis is disclosed in international patent application WO 1991/11248 A1. The sealing is made of an elastomer material located between the boundary areas of the frames.

The international patent application WO 2015/128631 A1 discloses a membrane stack where the curable adhesive may be interposed between alternate anion-exchange membranes and cation-exchange membranes by any suitable technique, wherein the adhesive is typically applied to the edge or periphery of the anion-exchange membrane or cation-exchange membrane using an adhesive applicator, for example a glue gun, which may be operated robotically if desired. In addition, the curable adhesive will be interposed as a line between each pair of membranes to be permanently secured together. The line of curable adhesive may be straight and run parallel to the edge of the membranes, although it may optionally take the form of a wavy line of curable adhesive. The adhesive may also be applied as multiple dots or bars which coalescence together to provide contiguous adhesive lines when the membranes are pressed together.

US 2005/0126981 A1 discloses Filtration devices that include filtration cassettes that feature a plurality of stacked subassemblies, wherein at least one of the subassemblies includes a porous membrane having a front side and a back side and a perimeter; and an overmolded frame that encapsulates the membrane around the perimeter of the front side and the back side of the membrane; wherein the overmolded frame forms at least one retentate port, at least one feed port, at least one filtrate port, and a flow channel proximate a perimeter of the frame; and an overmolded plastic jacket that penetrates the flow channels of the subassemblies to seal the stacked subassemblies; and methods for making the filtration device and cassettes.

Further US 5 922 200 A discloses a filtration apparatus for deadend filtration, which is formed from multilayer presealed elements and monolayer elements that are insert molded together. The device is provided with a feed port, and a filtrate port. The sealing configuration of the presealed elements and the seal provided by the insert molding step effect a seal configuration that causes a feed liquid to be filtered to form a filtrate such that the filtrate is not mixed with the feed.

In US 2012/0117789 A1 an electrical purification apparatus and methods of making same are disclosed. The electrical purification apparatus may provide for increases in operation efficiencies, for example, with respect to current efficiencies and membrane utilization.

Additionally, WO 2015/153885 A1 discloses electrochemical purification apparatuses for treating water and methods of assembling the devices are provided. The apparatuses may be crossflow electrochemical devices. The devices may be assembled and sealed through masking and application of a potting material. The devices may comprise various structures configured to improve the current efficiency of the device, reduce leakage, and improve the distribution of potting material to the assembly.

Disadvantageously all these methods for preparing a membrane stack disclose technical solutions where each of the membranes have to be glued together or heat-sealed either manually or mechanically. The methods for preparing a membrane stack according to the cited prior art are very time consuming and costly, e.g., when preparing a membrane stack comprising several hundred membranes.

Thus, the object of the invention is to provide a method for preparing a membrane stack, as well as a membrane stack itself and its use for desalination, while the method for preparing the membrane stack is less time consuming and costly with an at least constant tightness of the membranes to consequently eliminate the disadvantages of the prior art.

This object is achieved in a method for preparing a membrane stack of the type mentioned in that the at least two membranes further comprise an edge surrounding the at least one flow channel, the inlet and the outlet, the method comprising the steps (a) aligning the at least two membranes with each other so that edges of the at least one flow channel, the inlet and the outlet through the at least two aligned membranes are closed to form a membrane stack of alternately stacked membranes, (b) compressing the membrane stack after step (a) to sealingly connect the edges to prevent a liquid compound from penetrating the at least one flow channel, the inlet and the outlet of the at least two aligned membranes, (c) molding the according to step (a) formed membrane stack by the liquid compound to seal the at least two membranes, and (d) solidifying the liquid compound as sealing of the membrane stack. Advantageously the method for preparing a membrane stack is able to seal a membrane stack of at least two membranes, preferably several hundred membranes, in a very fast and cost-efficient way, wherein the resulting membrane stack has an improved mechanical stability as well as an improved leak-free operation.

In the embodiment of the method according to the invention the membrane stack is compressed after step (a). By compressing the membrane stack after step (a) before executing step (b) and sealing the membrane stack by molding, preferably overmolding, by a liquid compound on the one hand less liquid compound is needed to seal the membrane stack and on the other hand the accurately fitting membranes are on their inside less contaminated by liquid compound. Thus, the typically liquid compound does not enter the future at least one flow channel between the membranes and in the manifold holes as much as without compression but advantageously the sealing of the membrane stack according to step (b) fills the volume of membrane edge areas. Penetration of the liquid compound further than in the membrane edge areas is prevented by the preferably structured membranes (closed edge), by sealing an open edge via welding, potting or e.g., by using a sealing gasket in combination with a spacer.

In addition, advantageously the membrane stack is built in or placed into a form, preferably a lost form, before step (b) is executed. Thus, the liquid compound can easily be filled in the form, e.g., by an inlet or the like, so to fix and seal each membrane with another membrane of the membrane stack. By using a form, preferably a lost form, to execute step (b) it is possible to seal all membranes at once and/or mechanically stabilize the build membrane stack, whereby this is a very time-saving and cost-saving way to build a membrane stack. Preferably a rib or carcass structure is put between the form and the membranes before executing step (b). By introducing a rib or carcass structure between the form and the membranes a better positioning of the stacked membranes will be achieved and the built membrane stack for electrodialysis will demonstrate an improved mechanical stability. In addition, the volume between membranes and form is reduced which is why less liquid compound is needed to fix and seal the membranes of the membrane stack.

Furthermore, in a preferred embodiment of the method according to the invention the form is opened to release the membrane stack after step (c). Thus, the form can be used to build a membrane stack according to the inventive method more than once. For a more convenient release of the membrane stack the form is made of several parts. This is to easier open the form and therefore release the built membrane stack in a more comforting way.

In an advantageous embodiment of the method according to the invention two electrodes are stacked, preferably aligned, to the extremities of the membrane stack in step (a). By adding two electrodes to the membrane stack a full functioning "plug & play" electrodialysis module device is produced in a very comfortable way. The electrodes can be built in an electrode unit, which, e.g., comprises the mentioned electrode as well as an end-plate having the fluid connections for an application of the feed, dilute, concentrate and electrode rinsing. Between the electrode and the first membrane preferably there is a gap so to rinse the membrane's surface, e.g., with H₂O or with concentrate solution.

Furthermore, the object of invention is achieved by a membrane stack for electrodialysis of the type mentioned in that the at least two membranes further comprise an edge surrounding the at least one flow channel, the inlet and the outlet so that in a state wherein the at least two membranes are aligned with each other so that edges of the at least one flow channel, the inlet and the outlet through the at least two aligned membranes are closed to form a membrane stack of alternately stacked membranes and the membrane stack is sealed by molding after compression sealingly connects the edges to prevent a liquid compound from penetrating the at least one flow channel, the inlet and the outlet of the at least two aligned membranes.. The membrane stack according to the invention is built in a very time-saving and cost-effective way. Thus, the membrane stack can be offered to a particularly attractive price especially in developing countries. In addition of being a single-use product the membrane stack according to the invention is modifiable to become a re-usable product.

Another benefit of the membrane stack is that the liquid compound for sealing the membrane stack is a polymer, preferably a commodity thermoplast like polyethylene, polypropylene or the like. Advantageously the liquid compound for molding comprises glass fibres. The glass fibres enhance the mechanical stability of the sealing as well as the membrane stack.

In another preferred embodiment according to the invention the membrane stack comprises a form, preferably a lost form. Advantageously the form effects an even better mechanical stability by forming at least the side walls of the membrane stack. The form can be used as a single-use form, which is fixed permanently with the membranes, or as re-useable form, which is released of the membrane stack after the liquid compound is solidified, preferably by blowing dry air, if applicable, for cooling a melt or chemical crosslinking of the liquid compound. Preferably for releasing the membrane stack the form comprises several parts. Hence the membrane stack can be released in an easy and comfortable way without destroying the form or the membrane stack. This results in a better release of the membrane stack after the solidification of the liquid compound. Therefore, the inner walls of the form are treated with corresponding release agent or made of special material like PTFE so that after solidification of liquid compound the form could be opened and the overmolded membrane stack could be released more easily. Even more preferable the form comprises a rib or a carcass structure. The rib or carcass structure and the form are unconnected and/or connected with each other. In addition, the rib or carcass structure is made of a material more rigid than the liquid compound e.g., glass fibre reinforced polyamide, metal rods or the like. Advantageously the rib or carcass structure remains within the sealing even, so the membrane stack is released from the form. As a result, the membrane stack shows a good structural stability, whereby the mechanical stability is even more improved. In another preferred way to mechanically stabilise the membrane stack the form, preferably lost form, has a rib or carcass structure itself. Here, the form remains with the membrane stack to mechanically stabilise the stack.

Besides, the object of the invention is achieved by the use of a membrane stack for electrodialysis of the type mentioned in that the membrane stack is for removing salt from water, a product fluid, or a process solution.

In the following the invention will be described in more detail with reference to the enclosed figures.
- Figure 1: shows a plan view of a first embodiment of a profiled membrane used to build a membrane stack according to the invention,
- figure 2: shows a plan view of a second embodiment of a profiled membrane used to build a membrane stack according to the invention,
- figure 3: shows a plan view of a third embodiment of a profiled membrane used to build a membrane stack according to the invention,
- figure 4: shows a plan view of an exemplary embodiment of a casting mold for producing a profiled membrane,
- figure 5: shows a detailed cross-section drawing of a membrane edge for dense stacking according to a first embodiment of a profiled membrane shown in figure 1,
- figure 6: shows a detailed cross-section drawing of a membrane edge for dense stacking according to a second embodiment of a profiled membrane shown in figure 3,
- figure 7: shows a perspective view of an apparatus comprising a lost form for preparing an embodiment of an inventively membrane stack,
- figure 8: shows a plan view of the apparatus without top plate according to figure 7 and
- figure 9: shows a perspective view of a cassette type electrodialysis module using membrane stacks according to the invention.

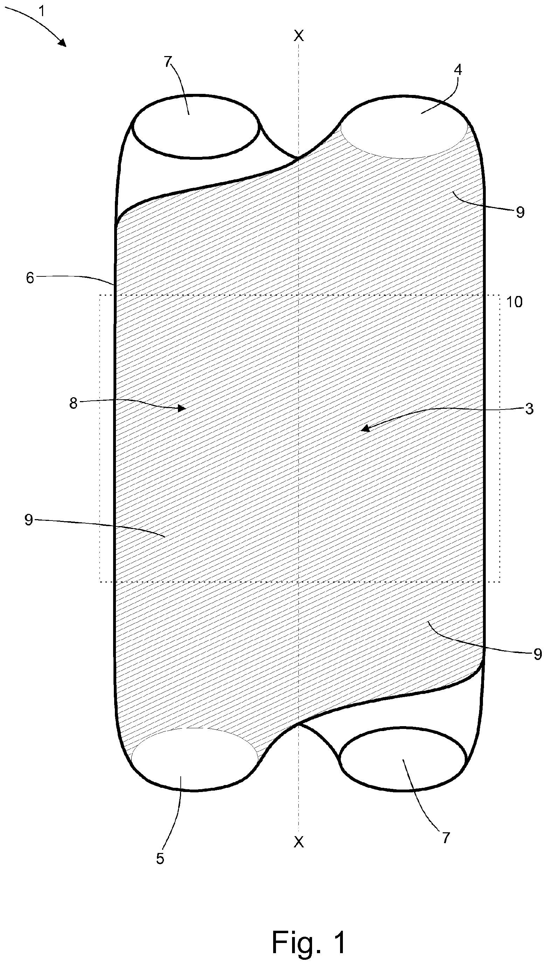

Figure 1 illustrates a plan view of a first embodiment of a profiled membrane 1. The profiled membrane 1 is used to build an unembodied membrane stack 2 according to the invention. Therefore, at least two profiled membranes 1 are used. The profiled membrane 1, either a cation-exchange membrane 1 or an anion-exchange membrane 1, comprises an active surface 3, an inlet 4 and an outlet 5, in which the membrane 1 further comprises a membrane edge 6 as well as manifold holes 7. The active surface 3 comprises at least one flow channel 8 whereat the active surface 3 of figure 1 comprises a flow channel 8 having a variety of notches 9. The flow channel 8 according to figure 1 is formed by notches 9 but can also have different shapes like cavities, pimples, chevron or the like. Preferably the membrane profiles are slightly higher in certain locations evenly distributed over the profiled area. At these contact points the profiles of adjacent membranes 1 will be more compressed, while the residual profile will have no or only loose contact, which is preferable for more open to the flow membrane area and less risk of electrochemically enhanced water dissociation at bipolar junctions. An edge 6 of the flow channel 8 is formed by a sealing edge. Preferably the edge 6 is formed slightly higher than the flow channel 8 having notches 9. By this configuration the edges 6 are compressed as the membranes 1 are stacked onto each other to form a dense sealing edge for the active surface 3. Therefore, the width of the edge 6 is preferably about 3 mm to 10 mm. Membrane profiles in the area of inlet 4 and outlet 5 of the flow channel 8 are preferably designed differently from the main (middle) part 10 of the flow channel 8 for distributing the water coming from the inlet 4 smoothly over the channel width in a short distance. For achieving this short flow distribution more dense positioning of pimples, higher flow attack angles of notches or other relevant shape changes can be undertaken in the inlet and outlet area close to manifolds. Preferably the shape of the membrane profile is optimized for stronger increased active membrane surface 3, reduced contact area between profiles and improved flow channel 8 integrity and flow parameters (mixing streams between anion-exchange and cation-exchange membranes; reduction of diffusion layer thickness, etc.).

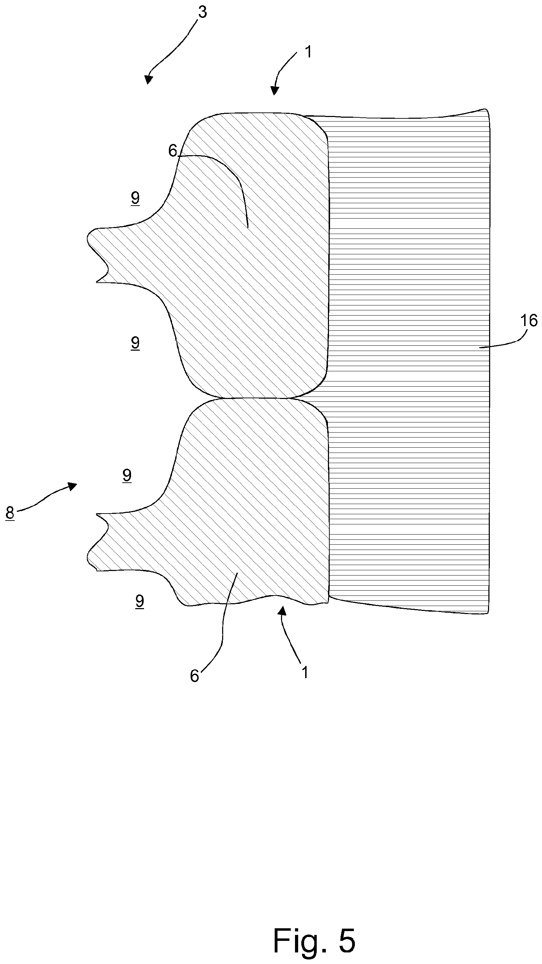

The angle between the notches of the flow channel 8 and the main flow direction could preferentially be larger for anion-exchange membranes than for cation-exchange membranes. Preferably the angle between the notches 9 of the flow channel 8 and the main flow direction should be about 1° to 60° higher for anion-exchange membranes than for cation-exchange membranes in order to have stronger shear force from the flow and thus reduce diffusion layer thickness on anion-exchange membrane 1 stronger. A favoured example how to overmold the profiled membranes 1 according to figure 1 is illustrated in figure 5.

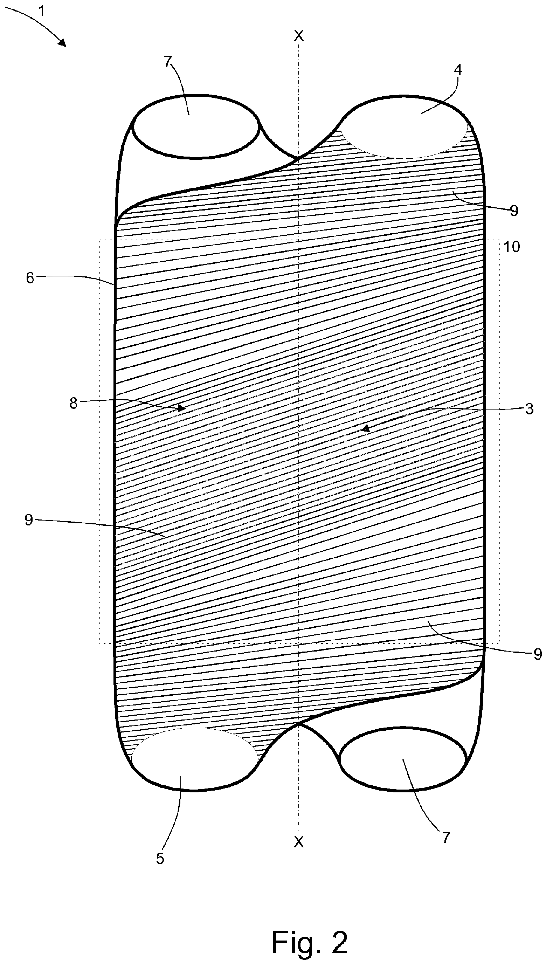

Figure 2 discloses a plan view of a second embodiment of a profiled membrane 1 used to build a membrane stack 2 according to the invention. In contrast to the embodiment of figure 1 the notches 9 of the of the membrane 1 in flow channel 8 have higher flow attack angles in range of the inlet 4 and/or outlet 5. Thus, the incoming fluid is distributed faster over the entire width of the flow channel 8 and the active membrane surface 3 is used more efficiently. The area of inlet 4 and outlet 5 of the flow channel 8 for distributing the water coming from the inlet 4 smoothly over the flow channel 8 width in a short distance is designed differently from the main (middle) part 10 of the flow channel 8.

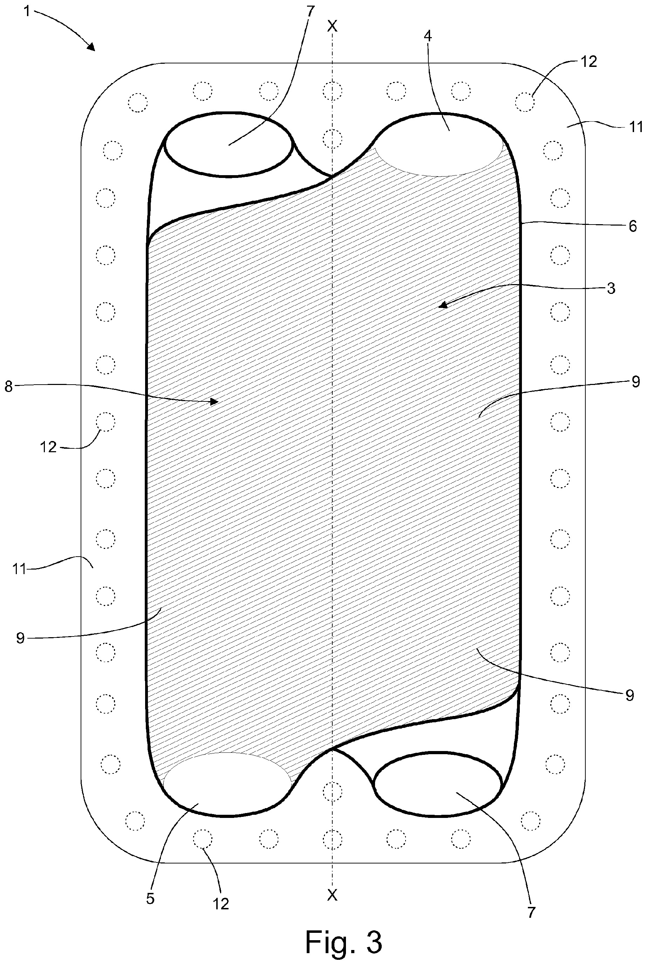

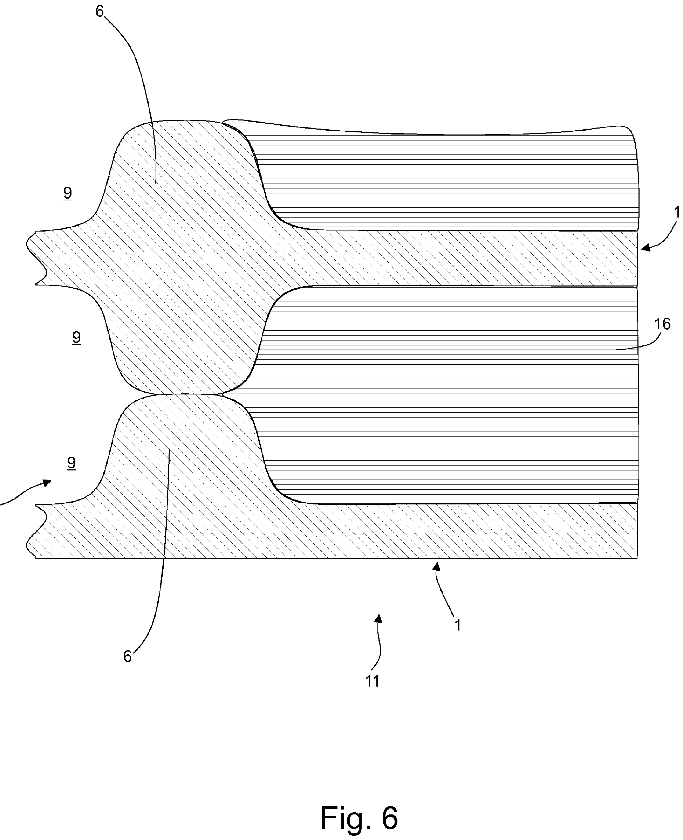

In figure 3 a plan view of a third embodiment of a profiled membrane 1 used to build an unembodied membrane stack 2 according to the invention is shown. The third embodiment of a profiled membrane 1 shows basically the same structure like the first embodiment of a profiled membrane 1 according to figure 1. Additionally, the third embodiment of a profiled membrane 1 has a membrane edge area 11 optionally comprising perforation holes 12 next to the edge 6. The perforation holes 12 can be used to better align the preferably profiled membranes 1 to each other. E.g., unembodied rods can put through the perforation holes 12 to mechanically stabilise the unembodied membrane stack 2. The membrane edge area 11 is used to better apply the liquid compound and thus to get an improved connection between the membranes 1. A favoured example how to overmold the profiled membranes 1 according to figure 3 is illustrated in figure 6.

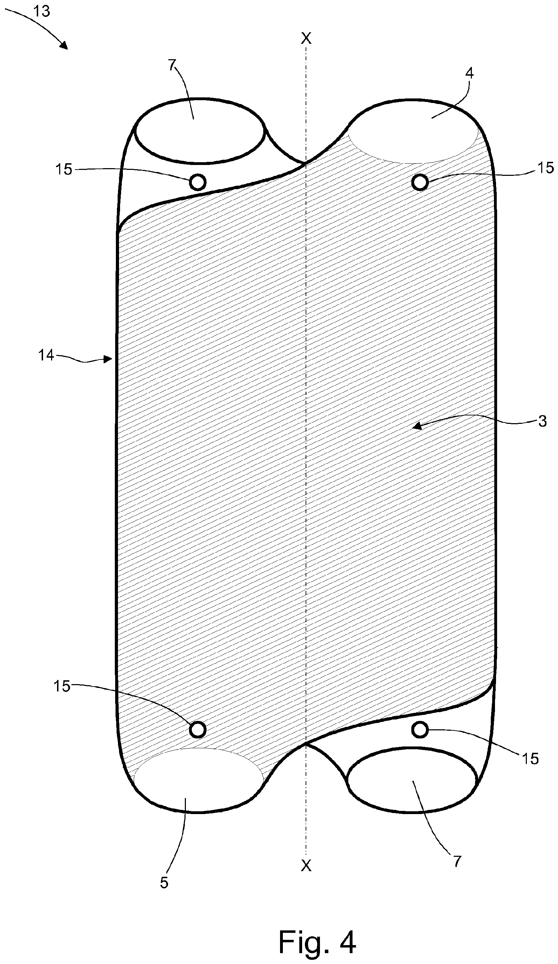

In figure 4 a plan view of a schematically illustrated casting mold 13 for producing a profiled membrane 1 as shown in figure 1 is depicted. The casting mold 13 has a mold 14 for a profiled active surface 3, an inlet 4 and an outlet 5 for the application of a dilute solution or a concentrate solution as well as manifold holes 7. Furthermore, injection points 15 for injecting a mixture of ion-exchange material and a binding polymer are shown. Preferably the injection points 15 are evenly distributed across the casting mold 11, more preferably the injections points 15 are located next to the edge 6 and/or the membrane edge area 11. More preferable, some injection points 15 are located in the membrane area where the flow enters and exits the future flow channel 8 between two membranes 1, as illustrated in the figure 4.

Hence, an efficient use of the mixture can be achieved because of no loss due to cutting. Thus, no need for tools, machines or labour is required. Furthermore, an advantage of the use of a casting mold 13 is, that another great variety of different profiled active surfaces 3 and a great variety of different membrane shapes like square, pentagon, hexagon, octagon, circular or the like can be cost efficiently produced. The casting mold 13 according to figure 4 for producing profiled membranes 1 features furthermore the advantages of saving mixture on the edge 6 and/or membrane edge area 11, easy positioning by stacking and therefore preventing penetration of sealing material, e.g., liquid compound into the flow channel 8 by molding, preferably overmolding.

The profiled membrane 1 is preferably made from a mixture of ion-exchange material (60 to 80 percent by volume) and a binding polymer (20 to 40 percent by volume). The peaks of the profiled active surface 3 contain less particles of ion-exchange material and more binding polymer in order to avoid bipolar junctions and consequent electrochemically enhanced water dissociation during electrodialysis. The profiled membrane 1 is preferably produced by injection molding, pressing, or extrusion with subsequent stamping or calendering of the mixture of ion-exchange material and a binding polymer into casting mold 13.

As binding polymer preferably, a commodity thermoplast like polyethylene (PE), e.g., linear low-density polyethylene (LLDPE) or ultra-high-molecular-weight polyethylene (UHMWPE) or the like is used. Possibly some cross-linking agents are used in the mixture (blending just prior to membrane formation) as well allowing cross-linking during and/or after the membrane formation for improved form stability and mechanical properties of the profiled membrane 1. Reinforcing materials like chopped glass fibres can be used in the raw mixture for
a) reducing expansion of membranes by swelling in water;
b) form stability (profile and overall shape remain eventually unchanged during the membrane stack 2 and module production, storage and operation);
c) higher mechanical stability of the membrane and the stack (rigidity, stiffness, etc.).

Preferably the compositions of both cation-exchange membrane 1 and anion-exchange membrane 1 are adjusted to have the same expansion by swelling in water, or the mentioned above stamping or calendaring of the profile is done on swollen membrane. That would allow using the same profiled mold 13 for manufacturing of both cation-exchange and anion-exchange membrane.

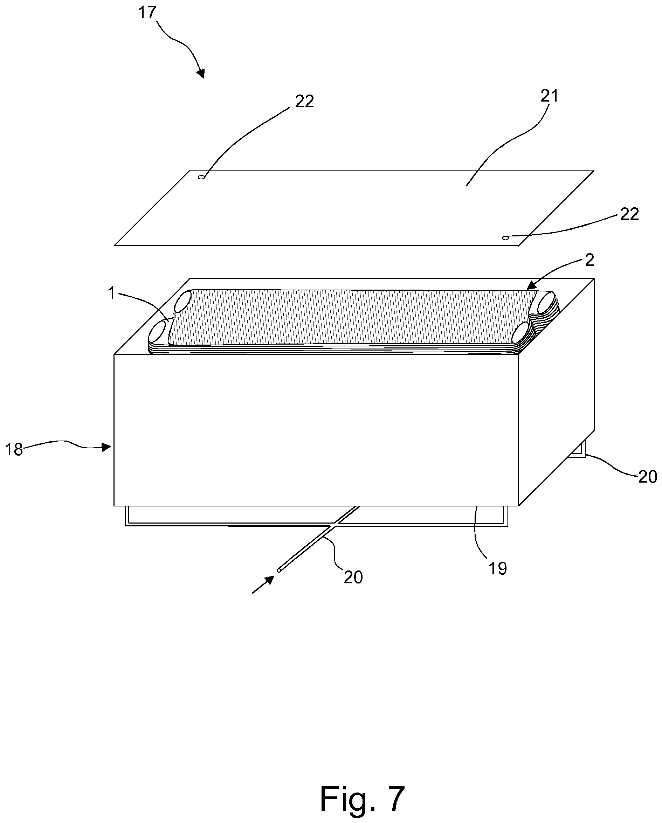

Figure 5 shows a detailed cross-section drawing of two overmolded membranes 1 according to a first embodiment of a profiled membrane 1 shown in figure 1. The two profiled membranes 1 are stacked onto each other so that the two membrane edges 6 contact each other to from a dense sealing edge and thus seal the flow channel 8 of the active surface 3. The profiled membranes 1 are then overmolded by liquid compound 16 so that the volume adjacent to the edge 6 is filled with liquid compound 16 to fix and/or seal the stack of membranes 2. Preferably the liquid compound 16 is applied to the profiled membranes 1 according to the method described in detail in figure 7. Advantageously this method fixes and/or seals the profiled membranes 1 in a faster and denser way.

In addition, figure 6 shows a detailed cross-section drawing of two stacked profiled membrane 1 according to the third embodiment shown in figure 3. The profiled membranes 1 are densely stacked onto each other, wherein the edges 6 of each membrane 1 are compressed to form a membrane sealing edge. The liquid compound 16 then applied to the profiled membranes 1 according to the method described in detail in figure 7. The liquid compound 16 fixes and/or seals the membrane edge area 11 together with the edge 6 so that no liquid compound 16 could enter the flow channel 8 formed between profiled membranes 1. This method fixes and/or seals the profiled membranes 1 in a fast and dense way, eventually with better fixation of stacked membranes prior to overmolding and providing larger adhesion surface between membrane material and liquid compound. Therefore, a stack of membranes 2 can be build more stable and with higher integrity.

In figure 7 a perspective view of an apparatus 17 comprising a form 18, preferably a lost form, for preparing a membrane stack 2 of membranes 1 according to the invention is illustrated. The apparatus 17 furthermore comprises a bottom plate 19 for molding and an inlet 20 for injecting the liquid compound 16 for molding, preferably overmolding, the membrane stack 2 as well as a top plate 21. The form 18, preferably the lost form, is itself for instance an injection molding part or an extruded profile. The form 18 can have a rib or carcass structure or a separate rib or carcass structure can be introduced in the space between the form 18 and the stack 2.

The method for preparing a membrane stack 2 according to the invention is described as follows:
The membranes 1 of membrane stack 2 are aligned with each other so that edges of the at least one flow channel 8, the inlet 4 and the outlet 5 through the at least two aligned membranes 1 are closed to form a membrane stack 2 of alternately stacked membranes 1. The membrane stack 2 is either build in or placed into the form 18 for molding, preferably overmolding.

Eventually a lost form 18 can be used, which will then create the external surface of the membrane stack 2. Than the liquid compound 16 is filled into the form 18 on the aligned membranes 1, to mold, preferably overmold, the according to step (a) formed membrane stack 2 to seal the at least two membranes 1. During the last step the liquid compound 16 as sealing of the membrane stack 2 is solidified, e.g., by polymerisation and cross-linking, or by cooling of a melt by blowing dry air or the like.

In a preferred method the membrane stack 2 is slightly compressed between bottom plate 19 and top plate 21, so that the form 18 is closed and a liquid compound 16 can be injected through an inlet 20 in the bottom plate 19, while the air evacuation happens through the holes 22 in the top plate 21. The top plate 21 and the bottom plate 19 have surfaces contacting the overmolding liquid compound 16. These are treated with corresponding release agent or made of special material like reinforced PTFE-film so that after solidification of liquid compound 16 the form 18 could be opened and the overmolded membrane stack 2 could be released more easily. During the overmolding process the liquid compound 16 fills the volume between the form 18 and the membrane edge areas 11 but does not enter in the future flow channels 8 between membranes 1 and in the manifold holes 7. The liquid compound 16 is then solidified due to cross-linking, e.g. polyurethane (PU), epoxy resin, silicones, modified silane polymers, etc., or due to cooling of a melt. Eventually the liquid compound 16 has certain elasticity to provide good sealing of the membrane stack 2 in the module. Liquid compound 16 could contain the same polymer or a polymer of the same type as the binding polymer of the membranes 1 thus advantageously improving adhesion to the membrane edge area 11 of the membrane 1.

For the water-containing ion-exchange membranes and some overmolding liquid compounds it might be advantageous to dry the membrane edge 11 to certain degree, e.g., by air-blowing, in order to avoid formation of voids and improve adhesion between the membranes 1 and the overmolding compound.

Alternatively, a soluble film could be stacked between membranes 1, then in the prepared membrane stack 2, after the molding process, the main part of that film is dissolved under controlled conditions in a suitable solvent. The small areas of the film located directly in the contact points with membranes 1 (edge-perimeter, contacts of notches, pimples etc.) must remain and be fixed there preventing direct contact between membranes 1. That is advantageous for eliminating the electrochemically enhanced water dissociation on the bipolar contacts between membranes 1 during the module operation.

Alternatively, to the stacking of only membranes 1 as shown in fig. 7 electrodes can be stacked to the extremities of the membrane stack 2 and overmolded together into a module. The unembodied electrodes can be used as solid plate only or could be first inserted into an end-plate and then overmolded together with the membranes 1 to build a membrane stack 2 according to the invention. Preferably such end-plates have a shape which could fit into the form 18 and/or fits the membranes 1.

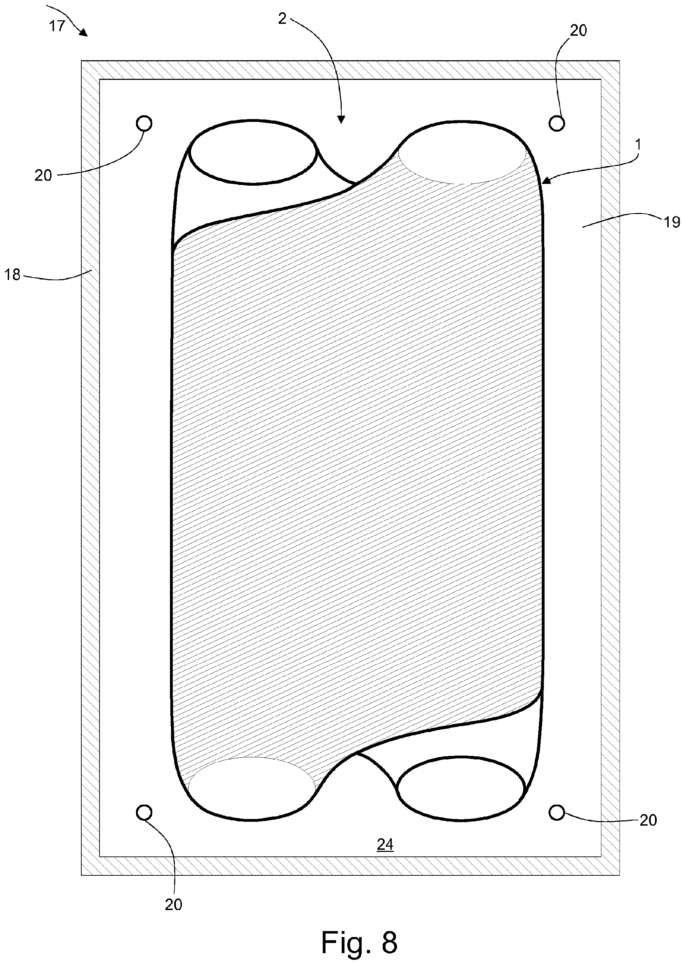

Figure 8 shows a plan view of the apparatus according to figure 7, wherein the top plate 21 is not shown. The aligned membranes 1 are stacked onto each other on the bottom plate 19 of form 18. As all the membranes 1 are stacked onto each other and aligned with each other the liquid compound is filled by the inlet 20 so that the membranes 1 are molded, preferably overmolded. The volume 24 between membranes 1 and form 18 can be filled by a rib or carcass structure. When molded the ribs or carcass structure leads to an improved mechanical stability.

Two types of ED-modules can be manufactured with the membrane stack 2 inside, namely, the cassette-type and the monolithtype.

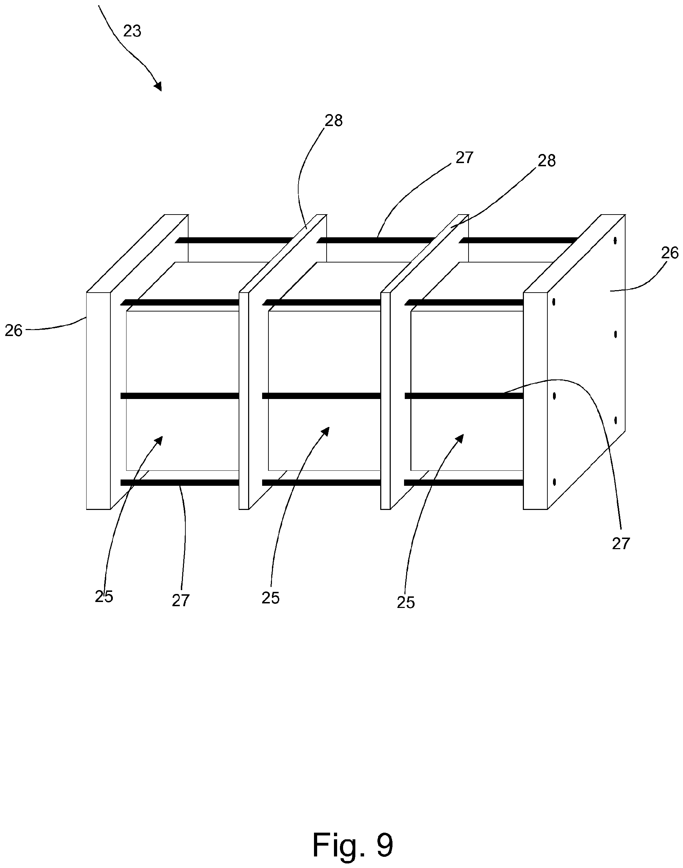

The cassette type electrodialysis module 23 is shown in figure 9:
The stacks 2 of overmolded membranes 1 are prepared as cassettes 25 separately and then the cassettes 25 are stacked between end-plates 26 with electrodes into the module 23.

In this case the manufacturing of the cassettes 25 can be organized separately from module 23. The cassettes 25 could consist of e.g., 100 membrane pairs with corresponding membranes 1 on extremities (AM one side / CM other side) and be packed, e.g., in vacuum sealed bags, for storage. The assembling of the module 23 can be done directly by the end-user, where depending on required desalination capacity a corresponding number of cassettes 25 are stacked between end-plates 26 with electrodes and closed (compressed) together into one module 23. A clamping lever or other mechanical fixation mechanism 27, e.g., using threaded rods, steel cable, cable ropes, springs, pull type gas springs, metal bands or the like could be used for compressing the cassettes 25 and keeping the module 23 leak-free.

In the cassette type electrodialysis, the electrodes can be made for long term (multiple) use, e.g., utilizing relatively expansive Ti-plates or expanded metal-mesh made of titanium with a precious coating of the platinum or mixed metal oxide, while cassettes 25 with membranes would be used limited time (one desalination batch or several) and would be replaced then. This cassette-type electrodialysis could be favourable in the applications where, e.g.
- membrane 1 and membrane stack 2 contamination must not be transferred from one batch to another (e.g., desalination batch in biopharmaceutical or food-and-beverage production chain);
- fast membrane aging, e.g., thermal or due to oxidative agents, occur;
- fast deterioration of the surface or clagging of channel due to e.g., irreversible scaling or fouling occur.

The inlets and the outlets for flow in and/or out of cassettes 25 should be designed so that by stacking several cassettes 25 the cassettes 25 will be fed in parallel from a corresponding hole in the end-plate 26. Alternatively, two types of cassettes 25 could be designed and produced so by stacking together the cassettes 25 will be flown in series. A frame adapter 28 fitting the cassette design can be utilized for mechanical reinforcement of the module 23 and for easier separation of the cassettes 25. Electrodes with slightly smaller area than the active membrane area can be used in order to reduce electrochemically enhanced water dissociation on the bipolar contacts between membranes 1 in the edge area and the current lost through the manifold. For example, the linear dimensions of the electrodes could be 10 % to 25 % smaller than that of corresponding active membranes.

The monolith type electrodialysis module 23:
Here the membrane stack 2 with electrodes are overmolded together in a mold or lost form 18. Inserts or special relief form in the mold might be required for the flow and electrical connectors.

Electrodes are designed for the life time expectation of the module. In the short use (limited operation time e.g., for one desalination batch) relatively inexpensive materials could be used for electrodes: metal wire mesh, metal foil (e.g. steel), graphite plate, packed bed of granular carbon or metal. The use of graphite might have an advantage for short use (single-use item) of the module because it could be then put into burnable garbage since all other components are burnable as well. A mixture (blend) of carbon powder with binding polymer can be formed with surface shape similar to that of membrane 1 so that a flow channel 8 will be formed between electrode and last profiled membrane 1 of the cassette 25.

The lost form 18 consists of two or more parts: The main part covers containing design elements for electric and hydraulic connectors. The stack 2 of membranes 1 between electrodes, if possible with electrode end-plates 26, is packed into the lost form 18, electrical connectors to outside are realized and the manifold holes 7 are closed; the lost form 18 is closed and the overmolding of the membrane stack 2, preferably under sufficient compression, takes place.

Ribs or other carcass structure from a material more rigid and stiff then the liquid compound as molding material could be introduced into the lost form before the molding process begins for a better mechanical stability of the module 23. This carcass structure can be made of glass fibre reinforced PA, rods or other material preferably connecting two extremities of the module 23.

The volume 24 between the membrane stack 2 and the form 18, preferably a lost form, can be filled with state of the art putting compounds like PU, epoxy, silicone, modified silane polymers, melted PE, glass fibre reinforced plastic, thermoplastic elastomers, etc. as one phase filler or as a foam; e.g., PU foam, other hard foams, etc.; that would contribute to material saving and reducing the weight of the module. The solidification of some foam fillers like several PU foams is accelerated and the foam structure improved (homogeneous fine porous structure) in contact with wet surfaces. For such materials a good adhesion to the water containing membranes 1 and mechanically stable foam structure will be provided for leak free module 23.

Both concepts of electrodialysis with overmolded cassettes or complete module presented here can also be applied for producing electrodialysis modules 23 from flat membranes 1 and spacers. For doing this the seal edge perimeter must be realized in the spacer (e.g., open-mesh plastic grid) for example by:
- melting the edge of the spacer and closing the edge with melted plastic residuals of the grid;
- extruding a thin adhesive strip in a highly viscous liquid form (paste) on the perimeter of the channel (into spacer); e.g., by extrusion of melted polyethylene or silicone, which will be then solidified;
- the spacer area which needs to be open then for the flow is filled with water, foamed water with gelatine or other materials which could be solidified, e.g., by freezing, and melted later. Alternatively, the spacer channel could be filled with material which could be sublimated (gas) or dissolved then, e.g., CaCO₃ powder which could be then dissolved in hydrochloric acid (HCl). Overmolding liquid compound 16 could not enter future flow area of the spacer. After solidification of overmolding liquid compound 16 the filler is removed by melting, sublimating or dissolving making the spacer channel free for flow.

Once the sealing edge in the spacer is introduced and the flat sheet membranes 1 are properly cut (stamped to the corresponding shape) the spacers and membranes 1 can be alternatively stacked and produced to molding, preferably overmolding, as described above.

In operation of the electrodialysis module preferably the rinsing solution, e.g., water, from the anode compartment (contains H⁺ and O₂ bubbles) is then used to rinse the cathode and/or concentrate compartments, that would reduce risk of carbonate scaling and current loss.

By using a carbon cathode (graphite, carbon granulate) the O₂ from anode reaction could be utilized at the cathode producing H₂O₂ and thus reducing the overall gas volume in the waste stream, reducing explosion risk (H₂ + O₂) and reducing the voltage for electrode reaction (energy consumption). Produced H₂O₂ in the electrode waste stream can be used for reduction of biofouling in waste containers or in subsequent concentration compartments.

The electrodialysis module 23 can be used as single-use or multiple-use module 23 for the desalination, e.g., in downstream processing of a bio-pharmaceutical production chain or in other applications where a long term multiple use of electrodialysis is restricted by the operating conditions and/or requirements.

For the desalination, e.g., salt removal from one batch after fermentation the module 23 should be used in an available installation providing flowing of solutions (pumps) and supplying DC power to electrodes as well as required control equipment. The cassette 25 or the module 23 should be provided as plug and play solution with start of the operation as well as an easy disconnection and (leak free) removal from the system.

The module 23 or the cassette 25 can be delivered together with dedicated container or plastic bag filled with solution for rinsing the concentrate and electrode compartments. Since a marginal penetration of ions from concentrate into diluate compartments is possible in electrodialysis the rinsing solution for concentrate compartments should not contain ions which must be removed from solution treated in the diluate compartments but could contain other ions which are not disturbing the process or which might be of additional use for treated solution, e.g., which might anyway be added to the treated solution in a subsequent step

## Claims

1. Method for preparing a membrane stack (2) for electrodialysis having at least two membranes (1), a cation-exchange membrane and an anion-exchange membrane in which the at least two membranes (1) comprise at least one flow channel (8), an inlet (4) and an outlet (5) **characterized in that**, the at least two membranes (1) further comprise an edge (6) surrounding the at least one flow channel (8), the inlet (4) and the outlet (5), the method comprising the steps
(a) aligning the at least two membranes (1) with each other so that edges (6) of the at least one flow channel (8), the inlet (4) and the outlet (5) through the at least two aligned membranes (1) are closed to form a membrane stack (2) of alternately stacked membranes (1),
(b) compressing the membrane stack (2) after step (a) to sealingly connect the edges (6) to prevent a liquid compound (16) from penetrating the at least one flow channel (8), the inlet (4) and the outlet (5) of the at least two aligned membranes (1),
(c) molding the according to step (a) formed membrane stack (2) by the liquid compound (16) to seal the at least two membranes (1), and
(d) solidifying the liquid compound (16) as sealing of the membrane stack (2).

2. Method according to claim 1, wherein the membrane stack (2) is built in or placed into a form before step (c) is executed.

3. Method according to claim 2, wherein a rib or carcass structure is put between the form (18) and the membranes (1) before executing step (c).

4. Method according to claim 2 or claim 3, wherein the form (18) is opened to release the membrane stack (2) after step (d).

5. Method according to any of the preceding claims, wherein the sealing of the membrane stack (2) according to step (c) fills the volume (24) of membrane edge areas (11).

6. Method according to any of the preceding claims, wherein two electrodes are stacked to the extremities of the membrane stack (2) in step (a).

7. Membrane stack (2) for electrodialysis having at least two membranes (1) a cation-exchange membrane and an anion-exchange membrane in which the at least two membranes (1) comprise at least one flow channel (8), an inlet (4) and an outlet (5) **characterized in that** the at least two membranes (1) further comprise an edge (6) surrounding the at least one flow channel (8), the inlet (4) and the outlet (5) so that in a state wherein the at least two membranes (1) are aligned with each other so that edges (6) of the at least one flow channel (8), the inlet (4) and the outlet (5) through the at least two aligned membranes (1) are closed to form a membrane stack (2) of alternately stacked membranes (2) and the membrane stack (2) is sealed by molding after compression sealingly connects the edges (6) to prevent a liquid compound (16) from penetrating the at least one flow channel (8), the inlet (4) and the outlet (5) of the at least two aligned membranes.

8. Membrane stack (2) according to claim 7, wherein the membranes have a profiled surface.

9. Membrane stack (2) according to claim 7 or claim 8, wherein the liquid compound (16) for molding comprises glass fibres.

10. Membrane stack (2) according to any of claim 7 to 9, wherein the membrane stack (2) comprises a form (18).

11. Membrane stack (2) according to claim 10, wherein the form (18) comprises several parts.

12. Membrane stack (2) according to claim 10 or claim 11, wherein the form (18) comprises a rib or a carcass structure.

13. Membrane stack (2) according to claim 12, wherein the rib or carcass structure and the form (18) are unconnected.

14. Membrane stack (2) according to claim 12 or 13, wherein the rib or carcass structure is made of a material more rigid than the liquid compound (16).

15. Use of a membrane stack (2) according to claim 7 for removing an electrolyte from water, a product fluid, or a process solution.

## Patentansprüche

1. Verfahren zur Herstellung eines Membranstapels (2) für die Elektrodialyse mit mindestens zwei Membranen (1), einer Kationenaustauschermembran und einer Anionenaustauschermembran, wobei die mindestens zwei Membranen (1) mindestens einen Strömungskanal (8), einen Einlass (4) und einen Auslass (5) aufweisen, **dadurch gekennzeichnet, dass** die mindestens zwei Membranen (1) ferner über eine den mindestens einen Strömungskanal (8), den Einlass (4) und den Auslass (5) umgebende Kante (6) verfügen, wobei das Verfahren die Schritte aufweist:
(a) Ausrichten der mindestens zwei Membranen (1) zueinander, sodass die Kanten (6) des mindestens einen Strömungskanals (8) , des Einlasses (4) und des Auslasses (5) durch die mindestens zwei ausgerichteten Membranen (1) geschlossen sind, um einen Membranstapel (2) aus abwechselnd gestapelten Membranen (1) zu bilden,
(b) Komprimieren des Membranstapels (2) nach Schritt (a), um die Kanten (6) abdichtend zu verbinden, um zu verhindern, dass eine flüssige Formmasse (16) in den mindestens einen Strömungskanal (8) eindringt,
(c) Übergießen des gemäß Schritt (a) gebildeten Membranstapels (2) mit der flüssigen Formmasse (16), um die mindestens zwei Membranen (1) abzudichten, und
(d) Verfestigen der flüssigen Formmasse (16) als Abdichtung des Membranstapels (2).

2. Verfahren nach Anspruch 1, **dadurch gekennzeichnet, dass** der Membranstapel (2) vor der Ausführung von Schritt (c) hergestellt oder in eine Form platziert wird.

3. Verfahren nach Anspruch 2, **dadurch gekennzeichnet, dass** eine rippen- oder karkassenförmige Struktur vor der Ausführung von Schritt (c) zwischen die Form (18) und die Membranen (1) eingelegt wird.

4. Verfahren nach Anspruch 2 oder Anspruch 3, **dadurch gekennzeichnet, dass** die Form (18) geöffnet wird, um den Membranstapel (2) nach Schritt (d) herauszunehmen.

5. Verfahren nach einem der vorhergehenden Ansprüche, **dadurch gekennzeichnet, dass** das Abdichten des Membranstapels (2) gemäß Schritt (c) das Volumen (24) der Membranrandbereiche (11) ausfüllt.

6. Verfahren nach einem der vorangehenden Ansprüche, **dadurch gekennzeichnet, dass** zwei Elektroden an den Enden des Membranstapels (2) in Schritt (a) gestapelt werden.

7. Membranstapel (2) für die Elektrodialyse mit mindestens zwei Membranen (1), einer Kationenaustauschermembran und einer Anionenaustauschermembran, wobei die mindestens zwei Membranen (1) mindestens einen Strömungskanal (8), einen Einlass (4) und einen Auslass (5) aufweisen, **dadurch gekennzeichnet, dass** die mindestens zwei Membranen (1) ferner über eine den mindestens einen Strömungskanal (8), den Einlass (4) und den Auslass (5) umgebende Kante (6) verfügen, sodass in einem Zustand, in dem die mindestens zwei Membranen (1) zueinander ausgerichtet sind, die Kanten (6) des mindestens einen Strömungskanals (8), der Einlass (4) und der Auslass (5) durch die mindestens zwei ausgerichteten Membranen (1) geschlossen sind, um einen Membranstapel (2) aus abwechselnd gestapelten Membranen (1) zu bilden, und der Membranstapel (2) durch Übergießen nach dem Komprimieren abdichtend mit den Kanten (6) verbunden ist, um zu verhindern, dass eine flüssige Formmasse (16) in den mindestens einen Strömungskanal (8), den Einlass (4) und den Auslass (5) der mindestens zwei ausgerichteten Membranen eindringt.

8. Membranstapel (2) nach Anspruch 7, **dadurch gekennzeichnet, dass** die Membranen eine profilierte Oberfläche aufweisen.

9. Membranstapel (2) nach Anspruch 7 oder Anspruch 8, **dadurch gekennzeichnet, dass** die flüssige Formmasse (16) Glasfasern aufweist.

10. Membranstapel (2) nach einem der Ansprüche 7 bis 9, **dadurch gekennzeichnet, dass** der Membranstapel (2) eine Form (18) aufweist.

11. Membranstapel (2) nach Anspruch 10, **dadurch gekennzeichnet, dass** die Form (18) mehrere Teile aufweist.

12. Membranstapel (2) nach Anspruch 10 oder Anspruch 11, **dadurch gekennzeichnet, dass** die Form (18) eine rippen- oder karkassenförmige Struktur aufweist.

13. Membranstapel (2) nach Anspruch 12, **dadurch gekennzeichnet, dass** die rippen- oder karkassenförmige Struktur und die Form (18) unverbunden sind.

14. Membranstapel (2) nach Anspruch 12 oder 13, **dadurch gekennzeichnet, dass** die rippen- oder karkassenförmige Struktur aus einem Material hergestellt ist, das steifer ist als die flüssige Formmasse (16).

15. Verwendung eines Membranstapels (2) nach Anspruch 7 zur Entfernung von Elektrolyten aus Wasser, einer Produktflüssigkeit oder einer Prozesslösung.

## Revendications

1. Procédé de préparation d'un empilement de membranes (2) pour l'électrodialyse ayant au moins deux membranes (1), une membrane échangeuse de cations et une membrane échangeuse d'anions, dans lequel les au moins deux membranes (1) comprennent au moins un canal d'écoulement (8), une entrée (4) et une sortie (5), **caractérisé en ce que** les au moins deux membranes (1) comprennent en outre un bord (6) entourant l'au moins un canal d'écoulement (8), l'entrée (4) et la sortie (5), le procédé comprenant les étapes
(a) d'alignement des au moins deux membranes (1) l'une avec l'autre de sorte que les bords (6) de l'au moins un canal d'écoulement (8), de l'entrée (4) et de la sortie (5) à travers les au moins deux membranes alignées (1) soient fermés pour former un empilement de membranes (2) de membranes empilées en alternance (1),
(b) de compression de l'empilement de membranes (2) après l'étape (a) pour relier de manière étanche les bords (6) afin d'empêcher un composé liquide (16) de pénétrer dans l'au moins un canal d'écoulement (8), l'entrée (4) et la sortie (5) des au moins deux membranes alignées (1),
(c) de moulage de l'empilement de membranes (2) formé selon l'étape (a) par le composé liquide (16) pour sceller les au moins deux membranes (1), et
(d) de solidification du composé liquide (16) en tant que scellement de l'empilement de membranes (2).

2. Procédé selon la revendication 1, dans lequel l'empilement de membranes (2) est construit en ou placé dans une forme avant l'exécution de l'étape (c).

3. Procédé selon la revendication 2, dans lequel une nervure ou une structure de carcasse est placée entre la forme (18) et les membranes (1) avant d'exécuter l'étape (c).

4. Procédé selon la revendication 2 ou 3, dans lequel la forme (18) est ouverte pour libérer l'empilement de membranes (2) après l'étape (d).

5. Procédé selon l'une des revendications précédentes, dans lequel le scellement de l'empilement de membranes (2) selon l'étape (c) remplit le volume (24) des zones de bord de membrane (11).

6. Procédé selon l'une des revendications précédentes, dans lequel deux électrodes sont empilées aux extrémités de l'empilement de membranes (2) dans l'étape (a).

7. Empilement de membranes (2) pour l'électrodialyse ayant au moins deux membranes (1), une membrane échangeuse de cations et une membrane échangeuse d'anions, dans lequel les au moins deux membranes (1) comprennent au moins un canal d'écoulement (8), une entrée (4) et une sortie (5), **caractérisé en ce que** les au moins deux membranes (1) comprennent en outre un bord (6) entourant l'au moins un canal d'écoulement (8), l'entrée (4) et la sortie (5) de sorte que, dans un état où les au moins deux membranes (1) sont alignées l'une avec l'autre, de sorte que les bords (6) de l'au moins un canal d'écoulement (8), de l'entrée (4) et de la sortie (5) à travers les au moins deux membranes alignées (1) soient fermés pour former un empilement de membranes (2) de membranes empilées en alternance (2) et l'empilement de membranes (2) soit scellé par moulage après que la compression permet de relier de manière étanche les bords (6) pour empêcher un composé liquide (16) de pénétrer dans l'au moins un canal d'écoulement (8), l'entrée (4) et la sortie (5) des au moins deux membranes alignées.

8. Empilement de membranes (2) selon la revendication 7, dans lequel les membranes ont une surface profilée.

9. Empilement de membranes (2) selon la revendication 7 ou 8, dans lequel le composé liquide (16) pour le moulage comprend des fibres de verre.

10. Empilement de membranes (2) selon l'une des revendications 7 à 9, dans lequel l'empilement de membranes (2) comprend une forme (18).

11. Empilement de membranes (2) selon la revendication 10, dans lequel la forme (18) comprend plusieurs parties.

12. Empilement de membranes (2) selon la revendication 10 ou 11, dans lequel la forme (18) comprend une nervure ou une structure de carcasse.

13. Empilement de membranes (2) selon la revendication 12, dans lequel la nervure ou la structure de carcasse et la forme (18) ne sont pas reliées.

14. Empilement de membranes (2) selon la revendication 12 ou 13, dans lequel la nervure ou la structure de carcasse est réalisée en un matériau plus rigide que le composé liquide (16).

15. Utilisation d'un empilement de membranes (2) selon la revendication 7 pour retirer un électrolyte de l'eau, d'un produit fluide ou d'une solution de traitement.
